# EUROPÄISCHE PATENTSCHRIFT

(11) **EP 3 398 836 B1**
(45) Veröffentlichungstag und Bekanntmachung des Hinweises auf die Patenterteilung: **11.12.2019**
(21) Anmeldenummer: 18000425.1
(22) Anmeldetag: 03.05.2018
(51) Int. Cl.: B62D 21/02

(54) **NUTZFAHRZEUG**
COMMERCIAL VEHICLE
VÉHICULE UTILITAIRE

(30) Priorität: 05.05.2017 DE 202017002351 U
(43) Veröffentlichungstag der Anmeldung: 07.11.2018
(73) Patentinhaber: Fahrzeugwerk Bernard Krone GmbH & Co. KG, 49757 Werlte (DE)
(72) Erfinder: Breer, Carsten, 49757 Werlte (DE); Baufeld, Torsten, 49757 Werlte (DE)
(74) Vertreter: Pott, Ulrich

(56) Entgegenhaltungen:
- DE-U1- 29 907 602
- US-B1- 8 714 592

## Beschreibung

Die Erfindung bezieht sich auf ein Nutzfahrzeug mit einem über Räder auf dem Erdboden abstützbaren Fahrgestell, das Längs- und Querträger aufweist, auf denen eine Ladeplattform abstützbar ist.

Nutzfahrzeuge, die im Lieferverkehr eingesetzt werden, sind für bestimmte Transportstrecken vielfach mit einer Abstellfläche zu verzurren, um das Nutzfahrzeug zu sichern. Dies ist beispielsweise der Fall, wenn Nutzfahrzeuge auf Schiffen oder Fähren transportiert werden sollen. Nach der Verladung auf einer Fähre ist gefordert, dass das Nutzfahrzeug an Ort und Stelle zu sichern ist. Dies geschieht üblicherweise durch Zurrgurte und Zurrseile, die an dem Fahrgestell des Nutzfahrzeuges festzulegen sind, um es dann mit einer Ladefläche z. B. eines Schiffes zu verankern.

In vielen Fällen stehen an dem Fahrgestell des Nutzfahrzeuges entsprechende Befestigungsaufnahmen nicht zur Verfügung. Sind welche vorhanden, sind diese in sehr aufwändiger Art und Weise an dem Fahrgestell festzulegen.

Aus der DE 299 07 602 U1 ist ein Universalhilfsrahmen für Nutzfahrzeuge zur Befestigung eines Kessels bzw. eines Tanks nebst zugehöriger Aggregate wie Pumpen und dergleichen bekannt, mit dem sich allerdings nicht Nutzfahrzeuge z. B. an einer Ladefläche z. B. eines Schiffes verankern lassen.

Aus der US 8,714,592 B1 ist ein Pick-Up-Fahrzeug bekannt mit seitlichen Chassis-Längsträgern, an denen ösenförmige Halterungen vorgesehen sind, an denen sich Zurrgurte festlegen lassen. Diese Halterungen sind jedoch mit den Längsträgern aufwendig zu verschweißen und stehen nach außen über die Querabmessungen des Fahrzeuges vor und auch im Falle des Vorsehens solcher Haken an einem Frontspoiler des Fahrzeuges ragen diese über die Längsabmessungen des Fahrzeuges hinaus. Dies bringt Unfallrisiken mit sich.

Es ist Aufgabe der vorliegenden Erfindung, ein Nutzfahrzeug der eingangs genannten Art dahingehend weiterzubilden, dass mit baulich einfachen Mitteln Befestigungsaufnahmen für die Anbringung von Zurrgurten u. dgl. an dem Fahrgestell vorzusehen sind.

Zur Lösung dieser Aufgabe zeichnet sich das Nutzfahrzeug der eingangs genannten Art dadurch aus, dass die benachbarten Längsträger gegenüberliegend vorgesehene, paarweise einander zugeordnete Lochausnehmungen haben, die jeweils von einem Befestigungselement durchsetzt sind, wobei das Befestigungselement einen Endbereich aufweist, der umgebogen oder abgekröpft ausgebildet ist und an einer Außenseite des Längsträgers unter Belassung eines ösenförmigen Befestigungsraumes angeordnet ist und wobei der andere Endbereich im Wesentlichen auf das zugeordnete andere Befestigungselement der anderen zugeordneten Lochausnehmung weist und wobei die einander zugeordneten zwei Befestigungselemente paarweise zusammenwirken und die aufeinanderzu weisenden Endbereiche miteinander verbunden sind.

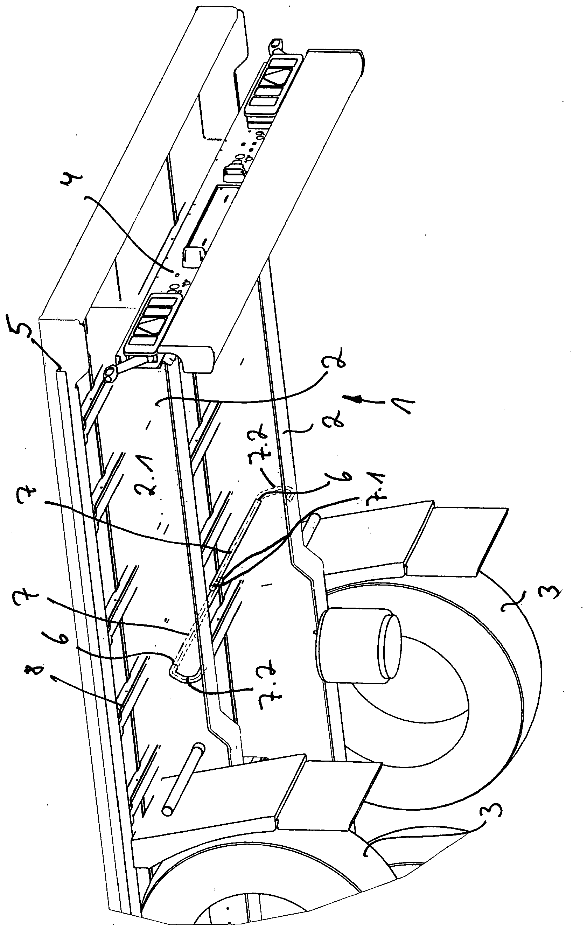

Damit ist ein Nutzfahrzeug geschaffen, bei dem schon werkseitig an mehreren Stellen eines Längsträgers entsprechende Lochausnehmungen vorgesehen sind, in denen entsprechende Befestigungselemente von außen einzustecken sind. Diese Befestigungselemente können handstockartig ausgebildet sein und einen geradlinigen langen Bereich aufweisen, der sich unterhalb der Ladeplattform von einem Längsträger in Richtung zu einem anderen benachbarten Längsträger erstreckt. Das Befestigungselement ist in einem Endbereich gebogen oder abgekröpft derart ausgebildet, dass im eingeschobenen Zustand des Befestigungselementes in den Längsträger bzw. in die Lochausnehmung des Längsträgers der abgekröpfte Endbereich mit dem Stirnende an der Außenwandung eines Längsträgers anliegt. Dadurch ist eine Befestigungsaufnahme in ösenförmiger Gestaltung geschaffen. Dieses Befestigungselement kann dann mit dem Längsträger verbunden werden, beispielsweise durch eine Verschweißung. Zudem kann es mit dem zugeordneten gegenüberliegend vorgesehenen, gleich gestalteten Befestigungselement verbunden werden, beispielsweise wiederum durch eine entsprechende Verschweißung. Es ist aber auch möglich, die Befestigungselemente so auszubilden, dass die aufeinanderzu weisenden Enden beispielsweise in einem Verbindungsstück nach Art einer Muffe eingeschraubt werden. Auf diese Weise ist es ebenfalls möglich, nicht nur Verzurrelemente wie Verzurrgurte aufzunehmen, um das Nutzfahrzeug beispielsweise für einen Schiffstransport sicher mit dem Schiffskörper zu verbinden und das Nutzfahrzeug zu sichern. Vielmehr ist es auch möglich, entsprechende Kräfte zwischen dem Längsträger und dem entsprechenden Fahrgestell zu übertragen und einzuleiten. Weitere Ausgestaltungen ergeben sich aus weiteren Unteransprüchen, der nachfolgenden Beschreibung und der Zeichnung. Die einzige Figur der Zeichnung zeigt in perspektivischer Darstellung eine Ansicht schräg von unten auf den Ausschnitt eines Fahrgestells.

Dieses Fahrgestell 1 weist Längsträger 2 auf und hat Räder 3, einen rückwärtigen Querträger 4 sowie eine Ladeplattform 5. In gegenüberliegenden Bereichen sind die beiden Längsträger 2 mit Lochausnehmungen 6 versehen, die so angeordnet sind, dass jeweils ein Befestigungselement 7 von der Außenwandung 2.1 eines Längsträgers 2 von außen einzustecken sind, wie dies in der Figur gezeigt ist. Dazu weisen die Lochausnehmungen 6 ein derartiges Versatzmaß zueinander auf an den beiden Längsträgern 2, dass, wie in der Figur gezeigt, die Endbereiche7.1 des jeweiligen Befestigungselementes nebeneinander anzuordnen und zu verschweißen sind. Die anderen Endbereiche 7.2 eines jeden Befestigungselementes sind abgekröpft bzw. umgebogen ausgebildet, so dass jedes Befestigungselement 7 im nicht montierten Zustand handstockartig ausgebildet ist. Im montierten Zustand und im eingeschobenen Zustand bildet dieser umgebogene bzw. abgekröpfte Endbereich 7.2 eines jeden Befestigungselementes eine Aufnahmeöse für beispielsweise einen Verzurgurt. Die umgebogenen Bereiche 7.2 können ebenfalls mit dem jeweiligen Längsträger 2 verschweißt werden.

Das Anbringen dieser Befestigungselemente 7.2 und die jeweilige Befestigung aneinander bzw. an dem jeweiligen Längsträger ist mit baulich sehr einfachen Mitteln zu vollziehen. Es können in einem Längsträger auf werkseitig schon mehrere Lochausnehmungen vorgesehen werden, um im Bedarfsfall die entsprechenden Befestigungselemente 7.2 vorzusehen.

## Patentansprüche

1. Nutzfahrzeug mit einem über Räder (3) auf dem Erdboden abstützbaren Fahrgestell (1), das Längs- (2) und Querträger (8) aufweist, auf denen eine Ladeplattform (5) abstützbar ist, **dadurch gekennzeichnet, dass** die benachbarten Längsträger (2) gegenüberliegend vorgesehene, paarweise einander zugeordnete Lochausnehmungen (6) haben, die jeweils von einem Befestigungselement (7) durchsetzt sind, wobei das Befestigungselement (7) einen Endbereich (7.2) aufweist, der umgebogen oder abgekröpft ausgebildet ist und an einer Außenseite (21) des Längsträgers (2) unter Belassung eines ösenförmigen Befestigungsraumes angeordnet ist und der andere Endbereich (7.1) im Wesentlichen auf das zugeordnete andere Befestigungselement (7) der anderen zugeordneten Lochausnehmung (6) weist und wobei die einander zugeordneten zwei Befestigungselemente paarweise zusammenwirken und die aufeinanderzu weisenden Endbereiche (7.1) miteinander verbunden sind.

2. Nutzfahrzeug nach Anspruch 1, **dadurch gekennzeichnet, dass** die aufeinander zu weisenden Endbereiche (7.1) der Befestigungselemente (7) miteinander verschweißt sind.

3. Nutzfahrzeug nach Anspruch 1 oder 2, **dadurch gekennzeichnet, dass** ein Befestigungselement (7) im nicht montierten Zustand handstockartig ausgebildet ist.

4. Nutzfahrzeug nach einem der Ansprüche 1 bis 3, **dadurch gekennzeichnet, dass** jedes Befestigungselement (7) mit dem zugeordneten Längsträger (2) verschweißt ist.

5. Nutzfahrzeug nach einem der Ansprüche 1 bis 4, **dadurch gekennzeichnet, dass** ein Befestigungselement (7) im Querschnitt rund ausgebildet ist.

## Claims

1. Commercial vehicle comprising a chassis (1) that can be supported on the ground by wheels (3), having longitudinal (2) and transverse supports (8) on which a loading platform (5) can be supported, **characterised in that** the adjacent longitudinal supports (2) have holes (6) provided opposite one another and mutually associated in pairs, through each of which a fastening element (7) passes, the fastening element (7) having an end region (7.2) which is bent down or bent at right angles and is arranged on an outer side (21) of the longitudinal support (2) while leaving a loop-shaped fastening space and the other end region (7.1) pointing substantially to the associated other fastening element (7) of the other associated hole (6), and the mutually associated two fastening elements cooperating in pairs and the mutually facing end regions (7.1) being interconnected.

2. Commercial vehicle according to claim 1, **characterised in that** the mutually facing end regions (7.1) of the fastening elements (7) are welded together.

3. Commercial vehicle according to either claim 1 or claim 2, **characterised in that** a fastening element (7) is formed in a walking-stick-like manner in the unassembled state.

4. Commercial vehicle according to any of claims 1 to 3, **characterised in that** each fastening element (7) is welded to the associated longitudinal support (2).

5. Commercial vehicle according to any of claims 1 to 4, **characterised in that** a fastening element (7) is round in cross section.

## Revendications

1. Véhicule utilitaire avec un châssis (1), qui peut s'appuyer sur le sol par l'intermédiaire de roues (3) et qui présente des longerons (2) et des traverses (8) sur lesquels une plateforme de chargement (5) peut s'appuyer, **caractérisé en ce que** les longerons (2) voisins ont des évidements de trous (6) qui sont prévus les uns en face des autres et associés par paires et qui sont traversés à chaque fois par un élément de fixation (7), dans lequel l'élément de fixation (7) présente une extrémité (7.2) qui est réalisée repliée ou coudée et est agencée au niveau d'un côté extérieur (21) du longeron (2) en laissant un espace de fixation en forme d'œillet et l'autre extrémité (7.1) est dirigée globalement vers l'autre élément de fixation (7) associé de l'autre évidement de trou (6) associé et dans lequel les deux éléments de fixation associés l'un à l'autre coopèrent par paire et les extrémités (7.1) dirigées l'une vers l'autre sont assemblées l'une à l'autre.

2. Véhicule utilitaire selon la revendication 1, **caractérisé en ce que** les extrémités (7.1), dirigées l'une vers l'autre, des éléments de fixation (7) sont soudées l'une à l'autre.

3. Véhicule utilitaire selon la revendication 1 ou 2, **caractérisé en ce qu'**un élément de fixation (7) à l'état non monté est réalisé comme une canne.

4. Véhicule utilitaire selon l'une quelconque des revendications 1 à 3, **caractérisé en ce que** chaque élément de fixation (7) est soudé au longeron (2) associé.

5. Véhicule utilitaire selon l'une quelconque des revendications 1 à 4, **caractérisé en ce qu'**un élément de fixation (7) est réalisé rond en coupe transversale.
